(19) **Europäisches Patentamt / European Patent Office / Office européen des brevets**

(11) **EP 4 585 658 A1**

(12) **EUROPEAN PATENT APPLICATION**
published in accordance with Art. 153(4) EPC

(43) Date of publication:
**16.07.2025 Bulletin 2025/29**

(21) Application number: **23862754.1**

(22) Date of filing: **23.06.2023**

(51) International Patent Classification (IPC):
$C09D\ 11/54$ (2014.01)    $B41M\ 5/00$ (2006.01)
$D06P\ 1/44$ (2006.01)    $D06P\ 5/00$ (2006.01)
$D06P\ 5/30$ (2006.01)    $B41J\ 2/01$ (2006.01)

(52) Cooperative Patent Classification (CPC):
B41J 2/01; B41M 5/00; C09D 11/40; C09D 11/54;
D06P 1/44; D06P 5/00; D06P 5/30

(86) International application number:
**PCT/JP2023/023337**

(87) International publication number:
**WO 2024/053209 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.09.2022 JP 2022141644**

(71) Applicant: **Sakata INX Corporation
Osaka-shi, Osaka 550-0002 (JP)**

(72) Inventors:
• **NODA, Ryuta**
 **Osaka-shi, Osaka 550-0002 (JP)**
• **MURAKAMI, Masaki**
 **Osaka-shi, Osaka 550-0002 (JP)**
• **KONISHI, Hiroyuki**
 **Osaka-shi, Osaka 550-0002 (JP)**

(74) Representative: **Müller-Boré & Partner
Patentanwälte PartG mbB
Friedenheimer Brücke 21
80639 München (DE)**

(54) **INKJET-TEXTILE PRINTING METHOD**

(57) An object is to maintain a chroma and an OD value of a printed image of a printed textile and a texture of the printed textile and to improve tackiness when an image is printed on a light-colored cloth by an inkjet textile printing method. As a solution, an inkjet textile printing method including steps A to C in this order is provided: a step A of preparing a light-colored textile pretreated with a pretreatment solution; a step B of applying by inkjet a white ink composition containing a white pigment, a water-dispersible resin, and water, to the pretreated light-colored textile; and a step C of applying by inkjet a chromatic color ink composition containing a chromatic color pigment, a water-dispersible resin, and water, onto an ink layer formed by the application of the white ink composition, in which an application amount of the white ink composition per unit area in an application region of the white ink composition is 3.0 to 13.0 times relative to an application amount of the chromatic color ink composition per unit area in an application region of the chromatic color ink composition in terms of solid content mass ratio.

**EP 4 585 658 A1**

## Description

### Technical Field

The present invention relates to an inkjet textile printing method.

### Background Art

Existing textile printing is a technique of drawing a pattern on a textile by drawing the pattern on a fabric called a textile using a glue that dissolves a dye or a pigment which is a colorant, fixing the colorant on the textile, and then performing washing with water. In existing textile printing, a pattern is drawn on a textile by subjecting the textile to screen textile printing using a screen plate for each color. In contrast, digital textile printing is a method of printing by applying a textile printing ink directly to a textile without using a screen plate. Unlike existing textile printing, digital textile printing is required to prevent "bleeding" of a textile printing ink in a textile by subjecting the textile to pretreatment before printing with the textile printing ink. One of digital textile printing methods is inkjet textile printing, in which an image is printed by applying by inkjet an inkjet textile printing ink to a textile.

An inkjet textile printing ink used in inkjet textile printing may contain a pigment or a dye as a colorant. In the case of containing a pigment, there is a problem in that the chroma is lower than that in the case of containing a dye.

Also, when an image is printed on a deep-colored fabric such as a black fabric by inkjet textile printing, in order to improve color developability of the image, a known method for printing an image includes printing a solid image on a pretreated textile with a white inkjet textile printing ink, and printing an image thereon with a color (chromatic color) inkjet textile printing ink (Patent Literature 1).

In contrast, when an image is printed on a light-colored fabric such as a white fabric by inkjet textile printing, since such a light-colored fabric has little effect on the color developability of the image, in general, an image is often printed directly with a color (chromatic color) inkjet textile printing ink without forming a solid image with a white inkjet textile printing ink in consideration of, for example, cost. However, in order to further increase the density of a printed image (develop a clearer color), a method has also been proposed in which a solid image is formed with a white inkjet textile printing ink even in the case of printing an image on a white fabric, and the image is printed thereon with a color (chromatic color) inkjet textile printing ink (Patent Literature 2).

### Background Art Literature

### Patent Literature

    Patent Literature 1: Japanese Patent Laid-open No. 2019-137777
    Patent Literature 2: Japanese Patent Laid-open No. 2009-149774

## Summary of the Invention

### Problems to Be Solved by the Invention

As described above, there has also been proposed a method in which, even in the case of printing an image on a white fabric by inkjet textile printing, a solid image is formed with a white inkjet textile printing ink, and a pattern is printed thereon with a color (chromatic color) inkjet textile printing ink; however, it has been found that unless the compositions of the inkjet inks and printing conditions for textile printing are optimized, quality of the resulting printed textile, in particular, the tackiness, deteriorates.

In view of the above, an object of the present invention is as follows. In printing an image on a light-colored fabric such as a white fabric by an inkjet textile printing method, when a solid image is printed with a white inkjet textile printing ink on a light-colored fabric (textile) such as a white fabric subjected to pretreatment, and an image is then printed with a chromatic color inkjet textile printing ink, a texture of the resulting printed textile is maintained, and tackiness is improved while quality (such as the chroma and the image density) of the printed image of the printed textile is improved.

### Means for Solving the Problems

The present invention relates to an inkjet textile printing method and an inkjet textile printing apparatus described below.

[1] An inkjet textile printing method including steps A to C below in this order:

a step A of preparing a light-colored textile pretreated with a pretreatment solution; a step B of applying by inkjet a white ink composition containing a white pigment, a water-dispersible resin having a glass transition temperature of -25°C or higher, and water, onto the pretreated light-colored textile; and a step C of applying a chromatic color ink composition containing a chromatic color pigment, a water-dispersible resin having a glass transition temperature of -25°C or higher, and water, onto an ink layer formed by the application of the white ink composition, wherein an application amount of the white ink composition per unit area in an application region of the white ink composition is 3.0 to 13.0 times relative to an application amount of the chromatic color ink composition per unit area in an application region of the chromatic color ink composition in terms of solid content mass ratio.

[2] The inkjet textile printing method according to [1], wherein the pretreatment solution contains a polyvalent metal salt and a water-dispersible resin.

[3] The inkjet textile printing method according to [1] or [2], wherein the water-dispersible resin contained in the white ink composition and/or the chromatic color ink composition is a urethane-based resin.

[4] An inkjet textile printing apparatus for subjecting a textile to inkjet textile printing, the inkjet textile printing apparatus including:

an inkjet head X for coating a textile with a white ink composition containing a white pigment, a water-dispersible resin having a glass transition temperature of -25°C or higher, and water; an inkjet head Y for coating the textile with a chromatic color ink composition containing a chromatic color pigment, a water-dispersible resin having a glass transition temperature of -25°C or higher, and water; a transfer mechanism that transfers the textile; and a controller that controls the inkjet head X, the inkjet head Y, and the transfer mechanism, wherein the controller is configured such that the chromatic color ink composition is applied onto a coating film formed on the textile with the white ink composition, and the controller is configured such that an application amount of the white ink composition per unit area in an application region of the white ink composition is 3.0 to 13.0 times relative to an application amount of the chromatic color ink composition per unit area in an application region of the chromatic color ink composition in terms of solid content mass ratio.

**Effects of the Invention**

Printing an image on a light-colored textile by the inkjet textile printing method according to the present invention can provide a printed textile which has high quality (such as the chroma and the OD value) of the printed image, whose texture is maintained, and which has improved tackiness.

**Mode for Carrying Out the Invention**

[1. Inkjet textile printing method]

An inkjet textile printing method according to the present invention is a method for printing an image on a textile using a pretreatment solution, a white ink composition (white inkjet textile printing ink), and a chromatic color ink composition (chromatic color inkjet textile printing ink). Herein, the textile is preferably a textile that exhibits a light color (light-colored textile).

More specifically, the inkjet textile printing method according to the present invention includes 1) a step A of preparing a textile pretreated with a pretreatment solution, 2) a step B of applying by inkjet a white ink composition to the pretreated textile, and 3) a step C of applying a chromatic color ink composition by ink jetting onto an ink layer formed by the application of the white ink composition in this order. The steps will be described separately below.

[1-1. Step A]

The inkjet textile printing method according to the present invention includes a step A of preparing a textile pretreated with a pretreatment solution. Specifically, a pretreatment solution is caused to adhere to a textile by, for example, applying the pretreatment solution to the cloth or immersing the textile in the pretreatment solution. Alternatively, a textile pretreated by others may be obtained and used in the inkjet textile printing method according to the present invention.

[1-1-1. With regard to textile]

The textile to be pretreated in the inkjet textile printing method is preferably a textile that exhibits a light color as described above. The light-colored textile includes a white textile but is not limited thereto. The light-colored textile is, for example, a textile of a hue with a lightness ($L^*$) of 70 or more and chroma ($C^*$) of 20 or less. The lightness ($L^*$) and the chroma ($C^*$) of the hue can be converted into numerical values with a colorimeter. The material of the textile to be pretreated is not particularly limited, and the textile may be an existing textile on which an image is to be formed by an inkjet textile printing method. Examples thereof include natural fibers such as cotton, hemp, wool, and silk; synthetic fibers such as polypropylene, polyester, acetate, triacetate, polyamide, and polyurethane; biodegradable fibers such as polylactic acid; and blended fibers thereof.

[1-1-2. With regard to pretreatment solution]

The pretreatment solution for pretreating the textile can be a pretreatment solution that has hitherto been used in inkjet textile printing methods. The pretreatment solution can aggregate components of a white ink composition and a chromatic color ink composition on the textile. The pretreatment solution preferably contains a) a polyvalent metal salt and b) a water-dispersible resin, usually contains c) an aqueous medium, and may further contain other optional components.

a) The polyvalent metal salt contained in the pretreatment solution is usually water-soluble. Examples thereof include dissociative salts of an alkaline earth metal such as Ca or Mg. In particular, salts of Ca are preferred. Typical examples of the polyvalent metal salt include $CaCl_2$, $Ca(OH)_2$, $(CH3COO)_2Ca$, $MgCl_2$, $Mg(OH)_2$, $(CH_3COO)_2Mg$, and calcium nitrate. The polyvalent metal salt content in the pretreatment solution is not particularly limited but is, for example, in a range of 0.1 to 40% by mass.
b) The water-dispersible resin contained in the pretreatment solution may be a resin emulsion, is not particularly limited as long as it is a water-dispersible resin having an ionic property in which the water-dispersible resin does not react with the metal salt in the pretreatment solution and precipitate, and is, for example, a nonionic or cationic water-dispersible resin. Also, in order to increase the density of an image obtained by the inkjet textile printing method, to not impair the texture of the textile of the resulting printed textile, and to enhance durability and washing fastness of the ink coating film, the water-dispersible resin contained in the pretreatment solution preferably has a glass transition temperature of 0°C or lower.

Examples of the water-dispersible resin include those containing, as a resin component, an acrylic-based resin, a styrene-acrylic-based resin, a urethane-based resin, a polyester-based resin, an olefin-based resin, a vinyl acetate-based resin, or the like. These may be used alone or in combination of two or more thereof. Note that when higher water resistance and washing fastness are required, a cross-linking component that is cross-linked by heat is preferably introduced to the water-dispersible resin as long as the texture does not deteriorate.
The pretreatment solution preferably contains 0.5 to 8% by mass of the water-dispersible resin (or resin emulsion) in terms of solid content. When the water-dispersible resin content is 0.5% by mass or more, the degree of whiteness tends to increase. When the water-dispersible resin content is 8% by mass or less, the texture of the textile of the printed textile tends to be maintained.
c) The aqueous medium contained in the pretreatment solution is not particularly limited, and water or a mixed solvent of water and a water-miscible solvent can be used. Specific examples of the water-miscible solvent include polyhydric alcohols such as glycerin, (poly)alkylene glycols such as (poly)ethylene glycol and (poly)propylene glycol, and alkyl ether thereof. Two or more of these may be used in combination.
The pretreatment solution may optionally contain a surfactant. The surfactant decreases the surface tension of the treatment solution and increases wettability to the textile to be treated. Preferred examples of the surfactant include acetylene glycol-based surfactants, silicon-based surfactants, and fluorine-based surfactants. The surfactant content in the treatment solution is not particularly limited but can be in a range of 0.01 to 1% by mass.
The pretreatment solution can optionally contain a water-soluble polymer for imparting viscosity. Regarding specific examples of water-soluble polymers, examples of natural polymers include publicly known natural water-soluble polymers such as starch substances, e.g., corn and wheat; cellulose-based substances, e.g., carboxymethyl cellulose, methyl cellulose, and hydroxyethyl cellulose; polysaccharides, e.g., gum arabic, locust bean gum, gum tragacanth, guar gum, and tamarind seeds; protein substances, e.g., gelatin and casein; tannin-based substances; and lignin-based substances. Examples of synthetic polymers include publicly known polyvinyl alcohol-based compounds and polyethylene oxide-based compounds. Of these, polysaccharide-based polymers and cellulose-based polymers are preferred. Furthermore, the pretreatment solution may optionally contain, for example, a pH-adjusting agent, a preservative/fungicide, a rustproofing agent, and a chelating agent.
The pretreatment solution can be produced by mixing components to be blended in the aqueous medium, and dispersing or dissolving the components.
It should be noted that when the pretreatment solution is caused to adhere to a textile by application by an inkjet printing method, the pretreatment solution preferably has a viscosity (20°C) of 3 mPa·s or more and 10 mPa·s or less, and preferably has a surface tension (20°C) of 20 mN/m or more and 40 mN/m or less.

[1-1-3. With regard to conditions for pretreatment]

Pretreating a textile can improve color development of an image in the printed textile. The pretreatment of the textile is performed by causing the pretreatment solution to adhere to the textile. The pretreatment solution can be applied to the textile by, for example, immersing the textile in the pretreatment solution or by various coating (rotor) means, atomization (spray) means, inkjet printing means, or the like.

The amount of pretreatment solution caused to adhere to the textile per unit area is, in terms of the mass of the pretreatment solution, for example, 10 $g/m^2$ or more, preferably 50 $g/m^2$ or more, more preferably 100 $g/m^2$ or more; and 2,000 $g/m^2$ or less, preferably 1,000 $g/m^2$ or less, more preferably 500 $g/m^2$ or less. Also, the amount of pretreatment solution caused to adhere to the textile per unit area is, in terms of the mass of the solid content of the pretreatment solution, for example, 0.5 $g/m^2$ or more, preferably 1 $g/m^2$ or more, more preferably 3 $g/m^2$ or more; and 50 $g/m^2$ or less, preferably 30 $g/m^2$ or less, more preferably 15 $g/m^2$ or less. When the amount of treatment solution is within the ranges described above, the treatment solution is easily uniformly applied to the textile, uneven aggregation in the image of the printed textile can be suppressed, and the color development can be enhanced.

In the pretreatment of the textile, after the pretreatment solution is caused to adhere to the textile, the solvent, etc. of the adhering pretreatment solution are dried; however, there may be cases where they are not dried. The drying may be natural drying or may be performed by, for example, heating, and a heat press method, a normal-pressure steam method, a high-pressure steam method, and a thermofix method can be employed.

[1-2. Step B]

The inkjet textile printing method according to the present invention includes a step B of applying by inkjet a white ink composition (white inkjet textile printing ink) to the pretreated textile.

[1-2-1. White ink composition (White inkjet textile printing ink)]

A white ink composition used in the inkjet textile printing method according to the present invention can contain a) a white pigment, c) a water-dispersible resin, and d) an aqueous medium containing water, and b) a polymer dispersant and e) other components.

In the white ink composition, a total amount (total solid content) of solid components (including the white pigment, the polymer dispersant, and the water-dispersible resin) is preferably 10 to 30% by mass, more preferably 15 to 25% by mass in the ink composition. If the total solid content is less than 10% by mass, the density of an image printed on the textile decreases. If the total solid content exceeds 30% by mass, the viscosity of the ink composition may increase, and discharge stability tends to decrease.

a) Examples of the white pigment include white inorganic pigments such as titanium dioxide, zinc oxide, zinc sulfide, antimony oxide, and zirconium oxide. White pigments having a high shielding property, such as titanium dioxide and zinc oxide, are preferably used. In particular, titanium dioxide is preferred from the viewpoint that a high light-shielding property is obtained. As titanium dioxide, those that have hitherto been blended in inkjet inks can be used. For example, preferred is titanium dioxide that is obtained by subjecting various types of titanium dioxide, such as rutile-type or anatase-type titanium dioxide, to surface coating with a surface treatment agent of alumina/silica (mass ratio) = 100/0 to 33.3/66.7 and that has an average particle size of 0.21 to 0.28 $\mu$m and an oil absorption of 15 to 33. Herein, the oil absorption is an oil absorption specified in JIS K 5101.

The white pigment content in the white ink composition is not particularly limited but is usually 3% by mass or more, preferably 5% by mass or more, more preferably 7% by mass or more; and usually 25% by mass or less, preferably 20% by mass or less, more preferably 15% by mass or less; particularly preferably 12% by mass or less.

b) The polymer dispersant contained in the white ink composition is preferably, for example, a resin obtained by neutralizing an anionic water-soluble resin having a glass transition temperature in a range of 0 to 80°C with a basic compound. Since a resin obtained by neutralizing an anionic water-soluble resin having a glass transition temperature of 0°C or higher with a basic compound is less likely to aggregate, storage stability and discharge stability of the ink composition are likely to be improved. Also, in an ink composition containing a resin obtained by neutralizing an anionic water-soluble resin having a glass transition temperature of 80°C or lower with a basic compound, the texture of the textile of the printed textile is likely to be maintained.

The anionic water-soluble resin can be a copolymer obtained by combining, as monomers, one or two or more carboxyl group-containing unsaturated monomers (including unsaturated monomers containing an acid anhydride group that undergoes ring opening to provide a carboxyl group) such as acrylic acid, methacrylic acid, itaconic acid, maleic acid, maleic anhydride, maleic acid monoalkyl esters, citraconic acid, citraconic anhydride, and citraconic acid monoalkyl esters; and one or two or more unsaturated monomers selected from styrene-based monomers such as styrene, $\alpha$-methylstyrene, and vinyltoluene, aralkyl methacrylates or acrylates such as benzyl methacrylate and benzyl acrylate, and alkyl methacrylates or acrylates such as methyl methacrylate, butyl methacrylate, 2-ethylhexyl methacrylate, stearyl methacrylate, lauryl methacrylate, methyl acrylate, butyl acrylate, 2-ethylhexyl acrylate, stearyl acrylate, and lauryl acrylate.

Also, the anionic water-soluble resin preferably has an acid value of 100 to 300 mgKOH/g. This is in order to ensure solubility of the polymer dispersant in the aqueous medium and to enhance water resistance of the resulting printed textile. Moreover, the anionic water-soluble resin preferably has a mass-average molecular weight of 5,000 to 40,000. This is in order to ensure pigment dispersibility and dispersion stability of the white pigment.

Preferred examples of anionic water-soluble resins include (meth)acrylic acid alkyl ester/(meth)acrylic acid copolymers, styrene/(meth)acrylic acid copolymers, styrene/(meth)acrylic acid/(meth)acrylic acid alkyl ester copolymers, styrene/maleic acid/(meth)acrylic acid alkyl ester copolymers, styrene/maleic acid half ester copolymers, styrene/maleic acid half ester-(meth)acrylic acid alkyl ester copolymers, styrene/(meth)acrylic acid/(meth)acrylic acid alkyl ester/benzyl (meth)acrylate copolymers, and acrylic acid/lauryl acrylate/styrene copolymers.

Examples of basic compounds for neutralizing the anionic water-soluble resin include alkali metal hydroxides such as sodium hydroxide and potassium hydroxide; and organic basic compounds such as triethylamine, monoethanolamine, triethanolamine, and triethylenediamine. These may be used alone or in combination of two or more thereof.

The polymer dispersant content in the white ink composition is not particularly limited but is preferably 0.2 to 10% by mass based on the ink composition; and is usually 2 parts by mass or more, preferably 5 parts by mass or more, and usually 60 parts by mass or less, preferably 40 parts by mass or less relative to 100 parts by mass of the white pigment. If the polymer dispersant content relative to the white pigment is less than 2 parts by mass, pigment dispersibility in the aqueous medium decreases. If the polymer dispersant content relative to the white pigment exceeds 60 parts by mass, the polymer dispersant content relative to the ink composition increases, and the viscosity of the ink composition is likely to increase. Accordingly, the blending amount of water-dispersible resin (resin emulsion) described later, the blending amount of aqueous medium described later, and the like are limited, and thus washing fastness of the printed textile and discharge stability of the ink composition decrease.

c) The water-dispersible resin contained in the white ink composition is usually a resin emulsion and can be a nonionic resin emulsion and/or an anionic resin emulsion. The water-dispersible resin (that is, the resin emulsion) contained in the white ink composition has a glass transition temperature of -25°C or higher. When the glass transition temperature of the water-dispersible resin is a certain value or higher (that is, - 25°C or higher), tackiness of the printed textile is reduced, and stickiness is less likely to be felt. Furthermore, when the water-dispersible resin contained in the white ink composition has a glass transition temperature of 0°C or higher, tackiness of the printed textile is further reduced, and the sticky feel can be more effectively reduced.

Also, the water-dispersible resin contained in the white ink composition preferably has a glass transition temperature of 100°C or lower, more preferably 90°C or lower. When the glass transition temperature is a certain value or lower (that is, 100°C or lower), the texture of the printed textile is maintained, and the quality (for example, prevention of cracking) of the image of the printed textile is also enhanced.

On the other hand, from the viewpoint of more effectively maintaining the texture of the textile of the printed textile, in some cases, if the water-dispersible resin is a nonionic resin emulsion, the glass transition temperature thereof is preferably lower than 20°C, and if the water-dispersible resin is an anionic resin emulsion, the glass transition temperature thereof is preferably lower than 0°C.

When the water-dispersible resin (resin emulsion) contained in the white ink composition contains, as a constituent component of the resin, a cross-linking component that is cross-linked by heat, the printed textile can be provided with higher water resistance and washing fastness. Therefore, the water-dispersible resin preferably contains such a cross-linking component as long as the texture of the printed textile does not deteriorate.

The water-dispersible resin (resin emulsion) contained in the white ink composition can be a urethane-based resin, an acrylic-based resin, a styrene-acrylic-based resin, a fluorene-based resin, a polyolefin-based resin, a rosin-modified resin, a terpene-based resin, a polyester-based resin, a polyamide-based resin, an epoxy-based resin, a vinyl chloride-based resin, a vinyl chloride-vinyl acetate copolymer, or an ethylene-vinyl acetate-based resin, or the like; and is preferably a urethane-based resin from the viewpoint of low stickiness of a coating film.

The urethane-based resin contained as the water-dispersible resin in the white ink composition is a resin containing a urethane bond, a urea bond, an allophanate bond, or the like formed by a reaction of an isocyanate group with another reactive group (for example, a hydroxyl group, an amino group, a urethane bond group, a carboxyl group, or the like). Thus, for example, a urea resin is included in the urethane-based resin. The urethane-based resin is preferably a compound having a urethane bond produced by a reaction between a compound having an isocyanate group and a compound having a hydroxyl group.

The urethane-based resin may be of a polyether type containing an ether bond, a polyester type containing an ester bond, or a polycarbonate type containing a carbonate bond. Of these, a polycarbonate-type or polyether-type urethane-based resin having a cross-linking group is more preferred from the viewpoint of easily maintaining rubbing fastness of the image of the printed textile and the texture of the printed textile.

The urethane-based resin is preferably a urethane-based resin containing a cross-linking group. The cross-linking group may be an isocyanate group, a silanol group, a carboxyl group, or a hydroxyl group, and a substitutional group in which an isocyanate group is chemically protected (capped or blocked) (a blocked isocyanate group) is preferred. The blocked isocyanate group is deprotected and activated by heating and forms a cross-link bond (such as a urethane bond, a urea bond, or an allophanate bond). Also, the cross-linking group-containing urethane-based resin preferably has three or more cross-linking groups per molecule, and in such a case, a cross-linked structure is formed by a reaction of the cross-linking groups.

Such a cross-linking group-containing urethane-based resin emulsion is also commercially available. Examples thereof include: Takelac WS-6021 (Tg = 40°C) (trade name, Mitsui Chemicals, Inc., urethane-based resin emulsion, a polyether-based polyurethane with a polyether-derived backbone); Takelac WS-5100 (Tg = 120°C) (trade name, Mitsui Chemicals, Inc., urethane-based resin emulsion, a polycarbonate-based polyurethane with a polycarbonate-derived backbone); Superflex 870 (Tg = 78°C), 150 (Tg = 40°C), 420 (Tg = -10°C), 460 (Tg = -25°C), 470 (Tg = -31°C), 620 (Tg = 43°C), and 130 (Tg = 101°C) (trade names, DKS Co. Ltd., urethane-based resin emulsions); Permarin UA-150 (Tg = 36°C) (trade name, manufactured by Sanyo Chemical Industries, Ltd., urethane-based resin emulsion); Sancure 2710 (trade name, Lubrizol Japan Ltd., urethane-based resin emulsion); NeoRez R-9660, R-9637, and R-940 (trade names, Kusumoto Chemicals, Ltd., urethane-based resin emulsions); Adeka Bontighter HUX-380 and 290K (trade names, ADEKA Corporation, urethane-based resin emulsions); and Impranil DL1537 (Tg = -4°C) (trade name, Covestro AG, urethane-based resin emulsion). Of these, those having a glass transition temperature of -25°C or higher can be used.

The water-dispersible resin (resin emulsion) content in the white ink composition is preferably 1% by mass or more, more preferably 2.5% by mass or more, still more preferably 3% by mass or more; and preferably 20% by mass or less, more preferably 15% by mass or less, still more preferably 12% by mass or less, in terms of solid content relative to the total mass (100% by mass) of the ink. When the water-dispersible resin content is within the ranges described above, discharge stability of the ink composition and rubbing fastness of the resulting recorded product can be combined.

d) The aqueous medium contained in the white ink composition is not particularly limited, and water or a mixed solvent of water and a water-miscible solvent that has hitherto been commonly used in the inkjet field can be used.

Specific examples of water-miscible solvents include polyhydric alcohols and glycol ethers. Examples of polyhydric alcohols include glycols such as 1,2-pentanediol, methyl triglycol (triethylene glycol monomethyl ether), butyl triglycol (triethylene glycol monobutyl ether), butyl diglycol (diethylene glycol monobutyl ether), dipropylene glycol monopropyl ether, glycerin, 1,2-hexanediol, 1,2-heptanediol, 1,3-propanediol, 1,2-butanediol, 1,3-butanediol, 1,4-butanediol, 2,3-butanediol, 2-methyl-3-phenoxy-1,2-propanediol, 3-(3-methylphenoxy)-1,2-propanediol, 3-hexyloxy-1,2-propanediol, 2-hydroxymethyl-2-phenoxymethyl-1,3-propanediol, 3-methyl-1,3-butanediol, 1,3-propanediol, 1,2-butanediol, 1,2-pentanediol, 1,4-butanediol, 1,5-pentanediol, 1,6-hexanediol, 2-methyl-2,4-pentanediol, and 3-methyl-1,5-pentanediol. Examples of glycol ethers include monoalkyl ethers of glycols selected from ethylene glycol, diethylene glycol, triethylene glycol, polyethylene glycol, propylene glycol, dipropylene glycol, tripropylene glycol, polypropylene glycol, and polyoxyethylene polyoxypropylene glycol. The water-miscible solvents may be used alone or in combination of two or more thereof.

The water-miscible solvent content in the white ink composition may be determined in consideration of, for example, discharge stability required for the ink, and is 1% by mass or more, preferably 5% by mass or more, more preferably 10% by mass or more, still more preferably 15% by mass or more; and on the other hand, 50% by mass or less, preferably 45% by mass or less, still more preferably 40% by mass or less, based on the ink composition.

e) Examples of the other components contained in the white ink composition include optional various additives such as a surfactant, a viscosity-adjusting agent, a defoaming agent, and a film-forming aid. The surfactant is not particularly limited, but acetylene-glycol-based surfactants, silicon-based surfactants, and fluorine-based surfactants can be preferably used. Also, the surfactant is preferably a nonionic surfactant so that uneven color development of the printed textile is less likely to be generated. The surfactant content in the white ink composition is not particularly limited but is usually 0.1% by mass or more, preferably 0.3% by mass or more, and usually 3% by mass or less, preferably 1.5% by mass or less.

The white ink composition preferably has a viscosity (25°C, measurable with, for example, a model R115 viscometer (RE017) available from Toki Sangyo Co., Ltd.) in a range of 2 to 20 mPa·s and preferably has a surface tension (25°C, measurable with, for example, an automatic wettability tester (WET-6000) available from RHESCA Co., Ltd.) in a range of 25 to 45 mN/m.

The white ink composition can be produced by a production method that has hitherto been commonly employed. The white ink composition can be obtained by, for example, mixing the a) white pigment, the b) polymer dispersant, the d) aqueous medium, etc.; dispersing the resulting mixture using a dispersing/stirring device, such as a bead mill, a ball mill, a sand mill, an attritor, a roll mill, an agitator, a Henschel mixer, a colloid mill, an ultrasonic homogenizer, an ultrahigh-pressure homogenizer, or a pearl mill to prepare a white pigment dispersion liquid; and further adding and mixing the c) water-dispersible resin, and as needed, materials such as a surfactant, a viscosity-adjusting agent, and a defoaming agent.

[1-2-2. Application conditions of white ink composition]

In the inkjet textile printing method according to the present invention, the white ink composition is applied by inkjet to the pretreated textile to form a white ink layer on the pretreated textile. The white ink layer may be formed, in a pretreated region of the textile, on part or the whole (preferably the whole) of a region where a chromatic color ink composition described later is to be applied.

In the application of the white ink composition, the number of times the white ink composition is applied may be one or two or more (that is, the application may be repeatedly performed to thereby provide multiple coating layers). The number of times the white ink composition is applied is, for example, 2 to 8. When the white ink composition is applied multiple times, drying may or may not be performed after each application.

In the application of the white ink composition, an application amount (amount adhering to the textile) per unit area in an application region of the white ink composition is 3.0 to 13.0 times relative to an application amount (amount adhering to the textile) per unit area in an application region of the chromatic color ink composition described later in terms of solid content mass ratio. Furthermore, the application amount of white ink composition is preferably 5 times or more, more preferably 7 times or more; and preferably 12 times or less, more preferably 11 times or less relative to the application amount of chromatic color ink composition in terms of solid content mass ratio. When the ratio is 3 times or more, the image quality of the printed textile is improved, and, for example, the chroma and the OD value of the image are enhanced. Also, when the ratio is 13 times or less, the texture of the printed textile can be maintained.

The solid content mass of the white ink composition corresponds to the weight of an ink layer after the solvent is removed by drying from the white ink composition applied to a textile. The ink layer contains at least a white pigment and a water-dispersible resin; and usually further contains a polymer dispersant which is a pigment dispersant, and other optional components that are not removed by drying.

In the application of the white ink composition, the application amount (amount adhering to the textile) per unit area in the application region of the white ink composition is, for example, 0.2 $g/m^2$ or more, preferably 0.3 $g/m^2$ or more, more preferably 0.4 $g/m^2$ or more; and for example, 4.0 $g/m^2$ or less, preferably 3.0 $g/m^2$ or less, more preferably 2.5 $g/m^2$ or less in terms of solid content mass.

When the application amount of white ink composition is 0.2 $g/m^2$ or more in terms of solid content mass, white color developability is good, which is preferable for a background image. In addition, an application amount of 0.2 $g/m^2$ or more is preferable because the image has excellent rubbing fastness, and uneven aggregation tends to be less noticeable. On the other hand, when the application amount is 4.0 $g/m^2$ or less, the texture of the printed textile is likely to be maintained.

In the application of the white ink composition, an application amount (amount adhering to the textile) per unit area in an application region of the white ink composition is 2.0 to 8.0 times relative to an application amount (amount adhering to the textile) per unit area in an application region of the chromatic color ink composition described later in terms of mass ratio of the ink compositions. Furthermore, the application amount of white ink composition is preferably 3.0 times or more, more preferably 3.5 times or more; and preferably 7.0 times or less, more preferably 6.5 times or less, still more preferably 6.0 times or less relative to the application amount of chromatic color ink composition in terms of mass ratio of the ink compositions. When the ratio is 2 times or more, the image quality of the printed textile is improved, and, for example, the chroma and the OD value of the image are enhanced. When the ratio is 8 times or less, the texture of the printed textile is likely to be maintained.

In the application of the white ink composition, the application amount (amount adhering to the textile) per unit area in the application region of the white ink composition is, for example, 1 $g/m^2$ or more, preferably 1.5 $g/m^2$ or more, more preferably 2 $g/m^2$ or more; and for example, 20 $g/m^2$ or less, preferably 15 $g/m^2$ or less, more preferably 13 $g/m^2$ or less in terms of mass of the ink composition. Note that in a case where the white ink composition is applied multiple times, the total amount is regarded as the application amount.

When the application amount of white ink composition is 1 $g/m^2$ or more in terms of mass of the ink composition, white color developability is good, which is preferable for a background image. In addition, an application amount of 1 $g/m^2$ or more is preferable because the image has excellent rubbing fastness, and uneven aggregation tends to be less noticeable. On the other hand, when the application amount is 20 $g/m^2$ or less, the texture of the printed textile is likely to be maintained.

After the white ink composition is applied to the textile and before the chromatic color ink composition is applied, the aqueous solvent and the like of the white ink composition need not be dried, but may be dried.

[1-3. Step C]

The inkjet textile printing method according to the present invention includes a step C of applying by inkjet a chromatic color ink composition onto an ink layer formed by the application of the white ink composition to the textile.

[1-3-1. Chromatic color ink composition (Chromatic color inkjet textile printing ink)]

A chromatic color ink composition used in the inkjet textile printing method according to the present invention contains A) a chromatic color pigment, C) a water-dispersible resin which is a binder component, and D) an aqueous medium containing water, usually further contains B) a polymer dispersant, and can contain E) other optional components. Note that the composition and properties of the chromatic color ink composition have much in common with the composition and properties of the "white ink composition" described in [1-2-1] above; therefore, the chromatic color ink composition will be described below with reference to the description related to the white ink composition as appropriate.

In the chromatic color ink composition, a total amount (total solid content) of solid components (including the pigment, the polymer dispersant, and the water-dispersible resin) is preferably 5 to 20% by mass based on the ink composition. If the total solid content is less than 5% by mass, the density of an image printed on the textile decreases. If the total solid content exceeds 20% by mass, discharge stability of the ink composition tends to decrease.

A) The chromatic color pigment contained in the chromatic color ink composition can be, for example, an organic pigment of a chromatic color or carbon black serving as a black pigment; and organic pigments of chromatic colors are likely to exhibit the effect of the present invention, such as improvement in chroma. Examples of organic pigments of chromatic colors include azo pigments such as azo lakes, insoluble azo pigments, condensed azo pigments, and chelate azo pigments; polycyclic pigments such as phthalocyanine pigments, perylene pigments, anthraquinone pigments, quinacridone pigments, dioxazine pigments, thioindigo pigments, isoindolinone pigments, and quinaphthalone pigments; dye lakes such as basic reactive-type lakes and acid dye-type lakes; and nitro pigments. Note that, with regard to pigments contained in the chromatic color ink composition, some of the pigments may be white pigments as long as some or all of the pigments are chromatic color pigments.

In particular, from the viewpoint of enabling clear hues to be expressed, it is possible to use red-based pigments such as C. I. Pigment Violet 19 and C. I. Pigment Red 2, 3, 5, 16, 23, 31, 49, 57, 63, 122, 146, 177, 202, 242, and 254; blue-based pigments such as C. I. Pigment Blue 1, 2, 15:3, 16, and 17; and yellow-based pigments such as C. I. Pigment Yellow 3, 4, 5, 7, 14, 17, 50, 51, 74, 81, 83, 98, 105, 128, 138, 139, 151, 155, 180, and 185.

The pigment content in the chromatic color ink composition is usually 1% by mass or more, preferably 2% by mass or more; and usually 15% by mass or less, preferably 10% by mass or less based on the ink.

B) The polymer dispersant contained in the chromatic color ink composition can be a polymer dispersant obtained by neutralizing an anionic water-soluble resin with a basic compound. The anionic water-soluble resin preferably has a glass transition temperature of 40 to 90°C (more preferably 50 to 90°C), an acid value of 100 to 300 mgKOH/g (more preferably 130 to 240 mgKOH/g), and a mass-average molecular weight of 5,000 to 40,000 (more preferably 8,000 to 30,000).

When the acid value of the anionic water-soluble resin is 100 mgKOH/g or more, sufficient solubility of the polymer dispersant in the aqueous medium is obtained. When the acid value is 300 mgKOH/g or less, water resistance of the image of the resulting printed textile is likely to be enhanced. When the glass transition temperature of the anionic water-soluble resin is 40°C or higher, dispersed pigment particles are less likely to aggregate, and storage stability and discharge stability are likely to be enhanced. When the glass transition temperature is 90°C or lower, the texture of the printed textile is likely to be maintained. When the mass-average molecular weight of the anionic water-soluble resin is 5,000 or more, pigment dispersion stability in the ink composition is enhanced. When the mass-average molecular weight is 40,000 or less, pigment dispersibility in the aqueous medium is improved.

Examples of monomers constituting the anionic water-soluble resin in the chromatic color ink composition can be the same as the examples of monomers of the anionic water-soluble resin in the white ink composition described above. Specifically, the anionic water-soluble resin contained in the chromatic color ink composition can be a copolymer obtained by polymerization reaction of, for example, one or two or more carboxyl group-containing unsaturated monomers (including unsaturated monomers containing an acid anhydride group that undergoes ring opening to provide a carboxyl group) such as acrylic acid, methacrylic acid, itaconic acid, maleic acid, maleic anhydride, maleic acid monoalkyl esters, citraconic acid, citraconic anhydride, and citraconic acid monoalkyl esters; and one or two or more unsaturated monomers selected from styrene-based monomers such as styrene, α-methylstyrene, and vinyltoluene, aralkyl methacrylates or acrylates such as benzyl methacrylate and benzyl acrylate, and alkyl methacrylates or acrylates such as methyl methacrylate, butyl methacrylate, 2-ethylhexyl methacrylate, stearyl methacrylate, lauryl methacrylate, methyl acrylate, butyl acrylate, 2-ethylhexyl acrylate, stearyl acrylate, and lauryl acrylate.

Specific examples of the anionic water-soluble resin in the chromatic color ink composition are the same as the specific examples of the anionic water-soluble resin in the white ink composition described above; and include (meth) acrylic acid alkyl ester/(meth)acrylic acid copolymers, styrene/(meth)acrylic acid copolymers, styrene/(meth)acrylic acid/(meth)acrylic acid alkyl ester copolymers, styrene/maleic acid/(meth)acrylic acid alkyl ester copolymers, styrene/-maleic acid half ester copolymers, styrene/maleic acid half ester/(meth)acrylic acid alkyl ester copolymers, styrene/(meth) acrylic acid/(meth)acrylic acid alkyl ester/benzyl (meth)acrylate copolymers, and acrylic acid/lauryl acrylate/styrene copolymers.

Examples of basic compounds for neutralizing the anionic water-soluble resin to obtain a polymer dispersant in the chromatic color ink composition are the same as the examples of the anionic water-soluble resin in the white ink composition described above and include alkali metal hydroxides such as sodium hydroxide and potassium hydroxide; and organic basic compounds such as triethylamine, monoethanolamine, triethanolamine, and triethylenediamine. These may be used alone or in combination of two or more thereof.

The polymer dispersant content in the chromatic color ink composition is preferably 0.5 to 10% by mass based on the ink composition; and is preferably 20 parts by mass or more, more preferably 30 parts by mass or more; and preferably 60 parts by mass or less, more preferably 50 parts by mass or less relative to 100 parts by mass of the chromatic color pigment. When the polymer dispersant content relative to the color pigment is 20 parts by mass or more, pigment dispersibility in the aqueous medium is enhanced. When the polymer dispersant content is 60 parts by mass or less, the viscosity of the ink composition is less likely to increase, and design flexibility of, for example, the blending amount of water-dispersible resin (such as anionic resin emulsion or nonionic resin emulsion) and the blending amount of aqueous medium described later is enhanced, and consequently, washing fastness of the resulting printed textile and discharge stability of the ink composition are improved.

C) The water-dispersible resin contained in the chromatic color ink composition is usually a resin emulsion and can be an anionic resin emulsion and/or a nonionic resin emulsion. The water-dispersible resin (or the resin emulsion) contained in the chromatic color ink composition has a glass transition temperature of -25°C or higher, preferably 0°C or higher as in the water-dispersible resin contained in the white ink composition. This is in order to improve tackiness of the printed textile and to prevent the occurrence of stickiness.

Also, the water-dispersible resin contained in the chromatic color ink composition preferably has a glass transition temperature of 100°C or lower, more preferably 90°C or lower. When the glass transition temperature is a certain value or lower (that is, 100°C or lower), the texture of the printed textile is maintained, and the quality (for example, prevention of cracking) of the image of the printed textile is also enhanced.

On the other hand, the water-dispersible resin contained in the chromatic color ink composition can be an anionic resin emulsion and/or a nonionic resin emulsion as in the case of the water-dispersible resin contained in the white ink composition; however, in some cases, preferably, the glass transition temperature of the anionic resin emulsion is 0°C or lower, and the glass transition temperature of the nonionic resin emulsion is 0°C or lower. If the glass transition temperature of the resin emulsion is higher than 0°C, the texture of the textile of the resulting printed textile may deteriorate in some cases.

The water-dispersible resin contained in the chromatic color ink composition preferably contains, as a constituent component of the resin, a cross-linking component that is cross-linked by heat for the same reason as that of the water-dispersible resin contained in the white ink composition.

The water-dispersible resin contained in the chromatic color ink composition can be a urethane-based resin, an acrylic-based resin, a styrene-acrylic-based resin, a fluorene-based resin, a polyolefin-based resin, a rosin-modified resin, a terpene-based resin, a polyester-based resin, a polyamide-based resin, an epoxy-based resin, a vinyl chloride-based resin, a vinyl chloride-vinyl acetate copolymer, an ethylene-vinyl acetate-based resin, or the like; and is preferably a urethane-based resin from the viewpoint of less stickiness a coating film, as in the water-dispersible resin contained in the white ink composition.

The urethane-based resin contained in the chromatic color ink composition can be a resin containing a urethane bond, a urea bond, an allophanate bond, or the like, and is preferably a compound having a urethane bond produced by a reaction between a compound having an isocyanate group and a compound having a hydroxyl group, as in the urethane-based resin contained in the white ink composition.

For the same reason as that of the urethane-based resin contained in the white ink composition, the urethane-based resin contained in the chromatic color ink composition may be of a polyether type, a polyester type, or a polycarbonate type; of these, a polyether or polycarbonate-type urethane-based resin is more preferred.

The urethane-based resin contained in the chromatic color ink composition is preferably a urethane-based resin containing a cross-linking group as in the urethane-based resin contained in the white ink composition; and preferred examples of the cross-linking group, the number of cross-linking groups, etc. are also the same as those of the urethane-based resin contained in the white ink composition.

The urethane-based resin contained in the chromatic color ink composition is commercially available as in the case of the urethane-based resin contained in the white ink composition; and specific examples thereof are also the same as the specific examples of the urethane-based resin contained in the white ink composition.

The water-dispersible resin (resin emulsion) content in the chromatic color ink composition is preferably 1% by mass or more, and the lower limit value is more preferably 2.5% by mass or more, still more preferably 3% by mass or more in terms of solid content relative to the total mass (100% by mass) of the ink; also, it is preferably 20% by mass or less, more preferably 15% by mass or less, still more preferably 12% by mass or less. When the water-dispersible resin content is within the ranges described above, discharge stability of the ink composition and rubbing fastness of the resulting recorded product can be combined.

D) As the aqueous medium contained in the chromatic color ink composition, water, or a mixture of water and a water-miscible solvent that has hitherto been commonly used in the inkjet field can be used, as in the aqueous medium contained in the white ink composition. Specific examples of the water-miscible solvent contained in the chromatic color ink composition are the same as the specific examples of the water-miscible solvent contained in the white ink composition.

In order to obtain good discharge stability, the chromatic color ink composition may contain a surfactant and can contain an anionic surfactant or a nonionic surfactant. To provide an inkjet textile printing ink composition which has discharge stability and in which the amount of foam generated is small or foaming is less likely to occur, a nonionic surfactant is preferably contained.

The surfactant content in the chromatic color ink composition is preferably in a range of 0.1 to 2.0% by mass in the ink composition. When the amount of surfactant used is 0.1% by mass or more, a desired effect of interfacial activation (reducing the surface tension) is likely to be achieved. When the amount of surfactant used is 2.0% by mass or less, discharge stability of the ink composition is likely to be enhanced.

Specific examples of nonionic surfactants include acetylene glycol surfactants; acetylene alcohol surfactants; ethers, such as polyoxyethylene nonylphenyl ether, polyoxyethylene octylphenyl ether, polyoxyethylene dodecylphenyl ether, polyoxyethylene alkylallyl ethers, polyoxyethylene oleyl ether, polyoxyethylene lauryl ether, polyoxyethylene alkyl ethers, and polyoxyalkylene alkyl ethers; esters, such as polyoxyethylene oleate, polyoxyethylene oleate ester, polyoxyethylene distearate ester, sorbitan laurate, sorbitan monostearate, sorbitan monooleate, sorbitan sesquioleate, polyoxyethylene monooleate, and polyoxyethylene stearate; polyether-modified siloxane-based surfactants, such as dimethylpolysiloxane; and fluorine-containing surfactants, such as fluorinated alkyl esters and perfluoroalkyl carboxylic acid salts. These nonionic surfactants may be used alone or in combination of two or more thereof. Of these, polyoxyethylene alkyl ethers and ethylene oxide adducts of acetylene glycol are particularly preferred.

The chromatic color ink composition can further optionally contain various additives such as a viscosity-adjusting agent, a defoaming agent, and a film-forming aid.

The chromatic color ink composition preferably has a viscosity in a range of 2 to 20 mPa·s and preferably has a surface tension in a range of 25 to 45 mN/m as in the white ink composition.

The chromatic color ink composition can be produced by a typical production method. The ink can be obtained by, for example, mixing the A) chromatic color pigment, the B) polymer dispersant, the D) aqueous medium, etc.; dispersing the resulting mixture using a dispersing/stirring device, such as a bead mill, a ball mill, a sand mill, an attritor, a roll mill, an agitator, a Henschel mixer, a colloid mill, an ultrasonic homogenizer, an ultrahigh-pressure homogenizer, or a pearl mill to prepare a chromatic color pigment dispersion liquid; and further adding and mixing the C) water-dispersible resin, and as needed, remaining materials such as a surfactant, a viscosity-adjusting agent, and a defoaming agent.

[1-3-2. Application conditions of chromatic color ink composition]

In the inkjet textile printing method according to the present invention, the chromatic color ink composition is applied by an inkjet method to the textile on which the white ink layer has been formed to thereby print a chromatic color image. The chromatic color ink composition can be applied to part or the whole of the white ink layer formed on the textile. Note that the number of times the chromatic color ink composition is applied may be one or two or more.

In the application of the chromatic color ink composition, the ratio of the application amount per unit area in an application region of the white ink composition to the application amount per unit area in an application region of the chromatic color ink composition (white ink/chromatic color ink) is as described in the section of [1-2-2. Application conditions of white ink composition] above; the ratio is 3.0 to 13.0 times in terms of solid content mass ratio and 2.0 to 8.0 times in terms of the mass ratio of the ink compositions. Herein, in a case where a plurality of chromatic color ink compositions are applied, the application amount of chromatic color ink composition in the inkjet textile printing method according to the present invention means a total amount of the plurality of chromatic color ink compositions applied.

In the application of the chromatic color ink composition, the application amount per unit area in the application region of the chromatic color ink composition is, for example, 0.05 g/m$^2$ or more, preferably 0.08 g/m$^2$ or more, more preferably 0.10 g/m$^2$ or more; and for example, 1 g/m$^2$ or less, preferably 0.5 g/m$^2$ or less, more preferably 0.3 g/m$^2$ or less in terms of solid content mass. An application amount of chromatic color ink of 0.05 g/m$^2$ or more is preferred in that color developability of an image of the printed textile is good. Also, an application amount of chromatic color ink of 1 g/m$^2$ or less

is preferred in that the printed image has good drying properties, bleeding of the image can be suppressed, and an image can be printed on the textile with good reproducibility.

Also, in the application of the chromatic color ink composition, the application amount per unit area in the application region of the chromatic color ink composition is, for example, 0.2 g/m$^2$ or more, preferably 0.5 g/m$^2$ or more, more preferably 1.0 g/m$^2$ or more; and for example, 10 g/m$^2$ or less, preferably 5.0 g/m$^2$ or less, more preferably 2.0 g/m$^2$ or less in terms of mass of the ink composition. An application amount of chromatic color ink of 0.2 g/m$^2$ or more is preferred in that color developability of an image of the printed textile is good. An application amount of chromatic color ink of 10 g/m$^2$ or less is preferred in that the printed image has good drying properties, bleeding of the image can be suppressed, and an image can be printed on the textile with good reproducibility.

[1-4. Image fixing step, etc.]

The inkjet textile printing method according to the present invention preferably includes, after the chromatic color ink composition is applied to the textile to print an image, a step of fixing the image to the textile by heating. Preferably, heating can be performed to 100 to 180°C. Heating means is not particularly limited, and a heat press machine, an iron, a dryer, a heating dryer, or the like can be used. It should be noted that this heating preferably causes a cross-linking reaction of the water-dispersible resin (preferably a urethane-based resin emulsion) contained in the white ink and/or the chromatic color ink.

The inkjet textile printing method according to the present invention may include a washing step in order to remove a component that could not be sufficiently fixed to the textile. The removal of such an unfixed component is likely to improve, for example, washing fastness and water resistance of the printed textile.

[2. Inkjet textile printing ink set]

An inkjet textile printing ink set according to the present invention includes a white ink composition and at least one chromatic color ink composition. The chromatic color ink composition may be any of a red ink (M), a blue ink (C), and a yellow ink (Y); and may be a combination of some or all of the inks. Furthermore, an ink of a color other than M, C, and Y may be included, and a black ink (K) may be included.

The white ink composition and the chromatic color ink composition in the inkjet textile printing ink set according to the present invention are as described in the sections of [1-2-1. White ink composition] and [1-3-1. Chromatic color ink composition], respectively.

These ink compositions are each used for subjecting a textile which is a light-colored cloth to inkjet textile printing using an inkjet printing apparatus. Specifically, a printed textile can be obtained by applying by inkjet a white ink composition to a pretreated light-colored cloth (textile) to form a white ink layer; and applying by inkjet a chromatic color ink composition to the formed ink layer to print a chromatic color image.

The ink compositions included in the inkjet textile printing ink set according to the present invention each contain a water-dispersible resin having a glass transition temperature of -25°C or higher; therefore, stickiness of the resulting printed textile can be reduced.

[3. Inkjet textile printing apparatus]

An inkjet textile printing apparatus according to the present invention is an apparatus for subjecting a textile to inkjet textile printing with a white ink composition and a chromatic color ink composition. Herein, the white ink composition and the chromatic color ink composition are preferably the ink compositions described in [1-2-1. White ink composition] and [1-3-1. Chromatic color ink composition] above, respectively. Also, the textile to be subjected to textile printing by the inkjet textile printing apparatus according to the present invention is a pretreated textile as described in [1-1. Step A] above.

The inkjet textile printing apparatus according to the present invention includes at least an inkjet head X for coating a textile with a white ink composition; an inkjet head Y for coating the textile with a chromatic color ink composition; a transfer mechanism (also referred to as a platen) that transfers the textile; and a controller that controls the inkjet head X, the inkjet head Y, and the transfer mechanism. The controller controls at least a discharge timing and/or a discharge speed of an ink of each of the inkjet heads and the transfer mechanism. The inkjet head X and the inkjet head Y may be separate, independent inkjet heads or may be a single inkjet head including a white ink composition and a chromatic color ink composition (as a cartridge).

The inkjet textile printing apparatus according to the present invention is configured by the controller such that a textile is coated with the white ink composition ejected from the inkjet head X, and a white ink layer formed on the textile is then coated with the chromatic color ink composition ejected from the inkjet head Y.

The inkjet textile printing apparatus according to the present invention is configured by the controller such that an amount of white ink composition ejected from the inkjet head X to the textile is 3.0 to 13.0 times relative to an amount of chromatic color ink composition ejected from the inkjet head Y to the textile in terms of solid content mass per unit area in an application region of the ink composition in the textile. Also, the inkjet textile printing apparatus according to the present invention is configured by the controller such that an amount of white ink composition ejected from the inkjet head X to the textile is 2.0 to 8.0 times relative to an amount of chromatic color ink composition ejected from the inkjet head Y to the textile in terms of mass of the ink composition per unit area in an application region of the ink composition in the textile.

Furthermore, the inkjet textile printing apparatus according to the present invention may include an inkjet head Z that ejects a pretreatment solution onto the textile. The pretreatment solution is as described in [1-1-2. With regard to pretreatment solution] above. The inkjet textile printing apparatus according to the present invention is configured by the controller such that before the textile is coated with the white ink composition ejected from the inkjet head X, the pretreatment solution ejected from the inkjet head Z is caused to adhere to the textile.

Also, the inkjet textile printing apparatus according to the present invention may further include mechanisms and members similar to those of existing inkjet textile printing apparatuses and includes, for example, a heating or drying mechanism that heats or dries the textile, a moving mechanism that moves the inkjet heads, and the like.

The inkjet textile printing apparatus according to the present invention is preferably an apparatus that performs the textile printing method described in [1. Inkjet textile printing method] above.

In the present invention, the glass transition temperature, the acid value, and the mass-average molecular weight of each resin contained in the pretreatment solution, the white ink composition, and the chromatic color ink composition are preferably determined as described below.

<Glass transition temperature>

The glass transition temperature of each resin is preferably a theoretical glass transition temperature determined by Wood's formula below.

Wood's formula:

$$1/Tg = W_1/Tg_1 + W_2/Tg_2 + W_3/Tg_3 + \cdots\cdots + W_n/Tg_n$$

(In the formula, Tg represents a theoretical glass transition temperature of a resin; $Tg_l$ to $Tg_n$ are glass transition temperatures of homopolymers of monomers 1, 2, 3, $\cdots$ n constituting a copolymer of the resin, respectively; and $W_1$ to $W_n$ represent polymerization fractions of the monomers 1, 2, 3, $\cdots$ n of the resin, respectively. It should be noted that the glass transition temperatures in Wood's formula are absolute temperatures.)

<Acid value>

The acid value is a theoretical acid value determined from the copolymer composition by calculation. The acid value of a resin can be calculated by, for example, determining a theoretical amount of KOH for neutralization with respect to an amount of each ethylenically unsaturated monomer theoretically required to obtain 1g of a copolymer, and regarding the total number of mg of the amounts necessary for neutralization as the acid value (also referred to as "theoretical acid value") of the copolymer.

<Mass-average molecular weight>

The mass-average molecular weight can be measured by the gel permeation chromatography (GPC) method. For example, the mass-average molecular weight can be determined in terms of polystyrene by performing chromatography using Water 2690 (Waters Corporation) as a GPC apparatus and PLgel 5$\mu$ MIXED-D (Polymer Laboratories Inc.) as a column.

Note that glass transition temperatures and acid values of commercially available resin products described in the Description of the present application are numerical values published by the suppliers, but are not necessarily the theoretical glass transition temperatures and the theoretical acid values, respectively, and are reference values.

**Examples**

Hereinafter, the present invention will be described with reference to Examples. However, the scope of the present invention should not be construed as being limited by the following Examples.

A. Preparation of pretreatment solution

To 94.98 parts by mass of water, 1 part by mass of calcium chloride, 2 parts by mass of polyethylene glycol having a mass-average molecular weight of 1,000, 2 parts by mass of an anionic acrylic-based resin emulsion (trade name: Mowinyl 966A) having a glass transition temperature of -32°C, and 0.02 parts by mass of an acetylene-based surfactant Surfynol 485 (Nissin Chemical Co., Ltd.) were added and stirred to prepare a pretreatment solution.

B. Preparation of white inkjet textile printing ink

B-1. Preparation of polymer dispersant (water-soluble resin varnish)

In a mixed solution of 4.9 parts by mass of potassium hydroxide and 70.1 parts by mass of water, 25 parts by mass of an anionic group-containing resin (acrylic acid/lauryl acrylate/styrene copolymer, mass-average molecular weight: 30,000, acid value: 185 mgKOH/g, glass transition temperature: 55°C) was dissolved to prepare a water-soluble resin varnish having an anionic-group containing resin solid content of 25%.

B-2. Preparation of white pigment dispersion liquid

To 16 parts by mass of the water-soluble resin varnish, 44 parts by mass of water was added and mixed to prepare a resin varnish for pigment dispersion. To the resin varnish for pigment dispersion, 40 parts by mass of a white pigment (titanium oxide, trade name "TIBAQUE CR-90", treated with alumina and silica, average primary particle size: 0.25 $\mu$m, ISHIHARA SANGYO KAISHA, LTD.) was further added and mixed by stirring, and the mixture was then kneaded with a wet circulation mill to prepare a white pigment dispersion liquid.

B-3. Preparation of white ink composition (white inkjet textile printing ink)

The white pigment dispersion liquid, WS-6021 or Superflex 460 serving as a urethane-based resin emulsion, Olfine E1010 and Surfynol 440 serving as surfactants, and glycerin, propylene glycol, and water serving as solvents were mixed and stirred in accordance with the compositions shown in Table 1 to obtain white ink compositions W1 and W2.

C. Preparation of blue ink composition (blue inkjet textile printing ink)

C-1. Method for producing blue pigment dispersion liquid

To 32 parts by mass of the water-soluble resin varnish prepared in B-1 above, 48 parts by mass of water was added and mixed to prepare a resin varnish for pigment dispersion. To the resin varnish for pigment dispersion, 20 parts by mass of a blue pigment (Pigment Blue 15:3, trade name "LIONOL BLUE FG-7330", TOYOCOLOR Co., Ltd.) was further added and mixed by stirring, and the mixture was then kneaded with a wet circulation mill to prepare a blue pigment dispersion liquid.

C-2. Preparation of blue ink composition (blue inkjet textile printing ink)

The blue pigment dispersion liquid, WS-6021, Superflex 460, Superflex 130, or Mowinyl 966A serving as a urethane-based resin emulsion, Olfine E1010 and Surfynol 440 serving as surfactants, and glycerin, propylene glycol, and water serving as solvents were mixed and stirred in accordance with the compositions shown in Table 1 to obtain blue ink compositions C1 to C4.

D. Preparation of red ink composition (red inkjet textile printing ink)

D-1. Preparation of red pigment dispersion liquid

To 32 parts by mass of the water-soluble resin varnish prepared in B-1 above, 48 parts by mass of water was added and mixed to prepare a resin varnish for pigment dispersion. To the resin varnish for pigment dispersion, 20 parts by mass of a red pigment (Pigment Red 122, trade name "CROMOPHTAL PINK PT", BASF SE) was further added and mixed by stirring, and the mixture was then kneaded with a wet circulation mill to prepare a red pigment dispersion liquid.

D-2. Preparation of red ink composition (red inkjet textile printing ink)

The red pigment dispersion liquid, WS-6021 serving as a urethane-based resin emulsion, Olfine E1010 and Surfynol 440 serving as surfactants, and glycerin, propylene glycol, and water serving as solvents were mixed and stirred in accordance with the composition shown in Table 1 to obtain a red ink composition M1.

[Table 1]

Table 1

|  | W1 | W2 | C1 | C2 | C3 | C4 | M1 |
|---|---|---|---|---|---|---|---|
| White pigment dispersion liquid | 25.0 | 25.0 |  |  |  |  |  |
| Red pigment dispersion liquid |  |  |  |  |  |  | 20.0 |
| Blue pigment dispersion liquid |  |  | 17.5 | 17.5 | 17.5 | 17.5 |  |
| Takelac WS-6021 | 25.0 |  | 20.0 |  |  |  | 20.0 |
| Superflex 460 |  | 20.0 |  | 15.0 |  |  |  |
| Superflex 130 |  |  |  |  | 17.1 |  |  |
| Mowinyl 966A |  |  |  |  |  | 13.3 |  |
| Olfine E1010 | 0.2 | 0.2 | 0.2 | 0.2 | 0.2 | 0.2 | 0.2 |
| Surfynol 440 | 0.5 | 0.5 | 0.5 | 0.5 | 0.5 | 0.5 | 0.5 |
| Glycerin | 22.0 | 22.0 | 25.0 | 25.0 | 23.0 | 23.0 | 25.0 |
| Propylene glycol | 3.0 | 3.0 | 9.0 | 9.0 | 9.0 | 9.0 | 9.0 |
| Water | 24.3 | 29.3 | 27.8 | 32.8 | 32.7 | 36.5 | 25.3 |
| Total | 100.0 | 100.0 | 100.0 | 100.0 | 100.0 | 100.0 | 100.0 |

Details of the components shown in Table 1 are as follows.

Takelac WS-6021: anionic urethane-based resin emulsion, Tg = 40°C, NV = 30%, Mitsui Chemicals, Inc.
Superflex 460: anionic urethane-based resin emulsion, Tg = -25°C, NV = 38%, DKS Co. Ltd.
Superflex 130: anionic urethane-based resin emulsion, Tg = 101°C, NV = 35%, DKS Co. Ltd.
Mowinyl 966A: anionic acrylic-based resin emulsion, Tg = -32°C, NV = 45%, Japan Coating Resin Corporation
Olfine E1010: acetylene-based surfactant, Nissin Chemical Industry Co., Ltd.
Surfynol 440: acetylene-based surfactant, Nissin Chemical Industry Co., Ltd.

Inkjet textile printing of a textile was conducted using the pretreatment solution, the white ink compositions (W1 and W2), and the chromatic color ink compositions (C1 to C4 and M1) prepared above. The textile was a 100% cotton white textile.

The pretreatment solution was applied to the 100% cotton white textile such that the application amount was 200 g/m$^2$, and the solvent of the applied pretreatment solution was removed by drying to prepare a printing medium. The white ink composition (W1 or W2) was applied to the printing medium using an evaluation printer equipped with a head available from SPECTRA Corporation such that the application amounts were as shown in Tables 2 and 3, thus printing a white ink coating film (solid image). It should be noted that the application amounts shown in Tables 2 and 3 were achieved by repeating the application of the white ink composition multiple times. Subsequently, a solid image of the chromatic color ink composition (C1 to C4 or M1) was printed on the white ink coating film without drying the solvent of the white ink such that the application amounts were as shown in Tables 2 and 3. Subsequently, drying was performed by heating with a heat press machine at 170°C for 60 seconds to obtain printed textiles for evaluation. With regard to the amounts of ink applied, Tables 2 and 3 show the mass per unit area as the ink (ink application amount) and the mass per unit area of solid components in the ink (solid content).

It should be noted that in Comparative Examples 4 and 5, the chromatic color ink (C1 or M1) was printed directly on the pretreated printing medium without printing a white ink.

The obtained printed textiles were evaluated for the following items, and the evaluation results are shown in Tables 2 and 3: chroma and OD value, texture, and tackiness.

Chroma and OD value (optical density): The chroma and the OD value were measured with a spectrophotometer (product name: X-Rite eXact (X-Rite, Incorporated)).

Texture: Each printed textile was touched by hand and evaluated on the basis of the following criteria.

Evaluation criteria

○: A printed textile that bends easily and that has a texture close to the softness of the 100% cotton textile itself
△: A printed textile that bends easily but that makes the evaluator feel it is somewhat stiffer than the textile itself
x: A printed textile that makes the evaluator feel it is stiff

Tackiness: The printed surface of each printed textile was touched by hand and evaluated.

Evaluation criteria

○: No stickiness
△: Somewhat sticky
x: Sticky

[Table 2]

Table 2

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Textile | | White | White | White | White | White | White | White | White | White | White |
| White ink | | W1 | W1 | W1 | W1 | W2 | W2 | W2 | W1 | W1 | W1 |
| White ink | Ink application amount (A) g/m$^2$ | 2.8 | 8.3 | 9.7 | 8.3 | 8.3 | 8.3 | 8.3 | 3.5 | 8.3 | 10.7 |
| | Solid content (a) g/m$^2$ | 0.52 | 1.54 | 1.79 | 1.54 | 1.54 | 1.54 | 1.54 | 0.65 | 1.54 | 1.98 |
| Chromatic color ink | | C1 | C1 | C1 | C2 | C1 | C2 | C3 | M1 | M1 | M1 |
| Chromatic color ink | Application amount (B) g/m$^2$ | 1.4 | 1.4 | 1.4 | 1.4 | 1.4 | 1.4 | 1.4 | 1.7 | 1.7 | 1.7 |
| | Solid content (b) g/m$^2$ | 0.15 | 0.15 | 0.15 | 0.15 | 0.15 | 0.15 | 0.15 | 0.19 | 0.19 | 0.19 |
| Ink application amount ratio: (A)/(B) | | 2.0 | 5.9 | 6.9 | 5.9 | 5.9 | 5.9 | 5.9 | 2.1 | 4.9 | 6.3 |
| Solid content ratio: (a)/(b) | | 3.5 | 10.3 | 11.9 | 10.3 | 10.3 | 10.3 | 10.3 | 3.4 | 8.1 | 10.4 |
| Chroma | | 48.9 | 50.6 | 50.9 | 50.1 | 50.4 | 50.0 | 50.2 | 60.2 | 61.4 | 61.8 |
| OD value | | 1.27 | 1.26 | 1.23 | 1.25 | 1.26 | 1.24 | 1.24 | 1.48 | 1.47 | 1.44 |
| Texture | | ○ | ○ | △ | ○ | ○ | ○ | △ | ○ | ○ | △ |

(continued)

| | Examples | | | | | | | | | |
|---|---|---|---|---|---|---|---|---|---|---|
| | 1 | 2 | 3 | 4 | 5 | 6 | 7 | 8 | 9 | 10 |
| Tackiness | ○ | ○ | ○ | ○ | △ | △ | ○ | ○ | ○ | ○ |

[Table 3]

Table 3

| | | Comparative Examples | | | | |
|---|---|---|---|---|---|---|
| | | 1 | 2 | 3 | 4 | 5 |
| Textile | | White | White | White | White | White |
| White ink | | W1 | W1 | W1 | - | - |
| White ink | Ink application amount (A) g/m$^2$ | 1.4 | 13.9 | 8.3 | - | - |
| | Solid content (a) g/m$^2$ | 0.26 | 2.57 | 1.54 | - | - |
| Chromatic color ink | | C1 | C1 | C4 | C1 | M1 |
| Chromatic color ink | Ink application amount (B) g/m$^2$ | 1.4 | 1.4 | 1.4 | 1.4 | 1.7 |
| | Solid content (b) g/m$^2$ | 0.15 | 0.15 | 0.15 | 0.15 | 0.19 |
| Ink application amount ratio: (A)/(B) | | 1.0 | 9.9 | 5.9 | 0.0 | 0.0 |
| Solid content ratio: (a)/(b) | | 1.7 | 17.1 | 10.3 | 0.0 | 0.0 |
| Chroma | | 46.4 | 51.7 | 50.5 | 45.6 | 57.3 |
| OD value | | 1.28 | 1.12 | 1.25 | 1.21 | 1.41 |
| Texture | | ○ | x | ○ | ○ | ○ |
| Tackiness | | ○ | ○ | × | ○ | ○ |

Comparative Example 4 is an example in which the image was printed directly with the blue ink composition C1 without printing with a white ink composition. As is clear from the comparison with Examples 1 to 3 and 5, the chromas and the OD values of the printed textiles obtained in Examples 1 to 3 and 5 are found to be higher than those of the printed textile obtained in Comparative Example 4. Comparative Example 5 is an example in which the image was printed directly with the red ink composition M1 without printing with a white ink composition. As is clear from the comparison with Examples 8 to 10, the chromas and the OD values of the printed textiles obtained in Examples 8 to 10 are found to be higher than those of the printed textile obtained in Comparative Example 5. These results show that printing with a white ink composition increases the chromas and the OD values of the printed textiles.

Comparative Example 1 is an example in which the application amount in printing with the white ink composition W1 was 1.7 times relative to the application amount in printing with the blue ink composition C1 in terms of ink solid content mass (1 time in terms of ink composition mass). As is clear from the comparison with Examples 1 to 3 and 5, it is found that the chromas of the printed textiles obtained in Examples 1 to 3 and 5 are higher than that of the printed textile obtained in Comparative Example 1 because the ratio of the application amount of the white ink composition per unit area to the application amount of the chromatic color ink composition per unit area is a certain value or more. Thus, it is found that when the ratio of the application amount of the white ink composition per unit area to the application amount of the chromatic color ink composition per unit area is a certain value or more, the chroma of the printed textile increases.

Comparative Example 2 is an example in which the application amount in printing with the white ink composition W1 was 9.9 times relative to the application amount in printing with the blue ink composition C1. The evaluation of the textures of the printed textiles obtained in Examples 1 to 3 and 5 is found to be improved compared with the printed textile obtained in Comparative Example 2. Thus, it is found that when the ratio of the application amount of the white ink composition per unit area to the application amount of the chromatic color ink composition per unit area is a certain value or less, the evaluation of the texture is improved.

Comparative Example 3 is an example in which printing with the white ink composition W1 was performed, and the image was then printed with the blue ink composition C4 containing a resin emulsion having a glass transition temperature of - 30°C. In the printed textiles of Examples 2 and 4, in which the images were printed with the blue ink compositions C1 and C2 containing resin emulsions having glass transition temperatures of 40°C and -25°C, respectively, the evaluation of the tackiness is found to be improved compared with the printed textile of Comparative Example 3. Thus, it is found that when the glass transition temperature of the water-dispersible resin contained in a chromatic color ink is a certain temperature or higher, stickiness of the printed textile is reduced.

In Examples 1 to 10, the obtained printed textiles were each highly evaluated. In particular, the comparison between Example 2 and Example 5 and the comparison between Example 4 and Example 6 show that use of the white ink W1, which contains a resin emulsion having a glass transition temperature of 40°C, further improves the evaluation of the tackiness compared with the case of using the white ink W2, which contains a resin emulsion having a glass transition temperature of -25°C.

Also, the comparison between Examples 5 and 6 and Example 7, shows that use of the blue ink C3, which contains a resin emulsion having a glass transition temperature of 101°C, improves the evaluation of the tackiness compared with the cases of using the blue inks C1 and C2, which contain a resin emulsion having a glass transition temperature of -25°C or 40°C; whereas use of the blue inks C1 and C2, which contain a resin emulsion having a glass transition temperature of -25°C or 40°C, improves the evaluation of the texture compared with the case of using the blue ink C3, which contains a resin emulsion having a glass transition temperature of 101°C.

The comparison of Examples 1 to 3 and the comparison of Examples 8 to 10 show that when the ratio of the application amount of the white ink to the application amount of the chromatic color ink is a certain value or less, the evaluation of the texture of the resulting printed textile is further improved.

## Industrial Field of Application

By the inkjet textile printing method and the inkjet textile printing ink set according to the present invention, they can be used for obtaining an inkjet printed textile which has good image quality (such as the chroma and the image density), whose texture is maintained, and which has improved tackiness.

## Claims

1. An inkjet textile printing method comprising steps A to C below in this order:

   a step A of preparing a light-colored textile pretreated with a pretreatment solution;
   a step B of applying by inkjet a white ink composition containing a white pigment, a water-dispersible resin having a glass transition temperature of -25°C or higher, and water, to the pretreated light-colored textile; and
   a step C of applying by inkjet a chromatic color ink composition containing a chromatic color pigment, a water-dispersible resin having a glass transition temperature of -25°C or higher, and water, onto an ink layer formed by the application of the white ink composition,
   wherein an application amount of the white ink composition per unit area in an application region of the white ink composition is 3.0 to 13.0 times relative to an application amount of the chromatic color ink composition per unit area in an application region of the chromatic color ink composition in terms of solid content mass ratio.

2. The inkjet textile printing method according to claim 1, wherein the pretreatment solution contains a polyvalent metal salt and a water-dispersible resin.

3. The inkjet textile printing method according to claim 1 or 2, wherein the water-dispersible resin contained in the white ink composition and/or the chromatic color ink composition is a urethane-based resin.

4. An inkjet textile printing apparatus for subjecting a textile to inkjet textile printing, the inkjet textile printing apparatus comprising:

   an inkjet head X for coating a textile with a white ink composition containing a white pigment, a water-dispersible resin having a glass transition temperature of -25°C or higher, and water; an inkjet head Y for coating the textile with a chromatic color ink composition containing a chromatic color pigment, a water-dispersible resin having a glass transition temperature of -25°C or higher, and water; a transfer mechanism that transfers the textile; and a controller that controls the inkjet head X, the inkjet head Y, and the transfer mechanism,
   wherein the controller is configured such that the chromatic color ink composition is applied onto a coating film formed on the textile with the white ink composition, and

the controller is configured such that an application amount of the white ink composition per unit area in an application region of the white ink composition is 3.0 to 13.0 times relative to an application amount of the chromatic color ink composition per unit area in an application region of the chromatic color ink composition in terms of solid content mass ratio.

## INTERNATIONAL SEARCH REPORT

| | International application No. |
|---|---|
| | **PCT/JP2023/023337** |

| | |
|---|---|
| **A.** | **CLASSIFICATION OF SUBJECT MATTER** |

*C09D 11/54*(2014.01)i; *B41M 5/00*(2006.01)i; *D06P 1/44*(2006.01)i; *D06P 5/00*(2006.01)i; *D06P 5/30*(2006.01)i; *B41J 2/01*(2006.01)i

FI: D06P5/30; B41J2/01 123; B41J2/01 305; B41J2/01 401; B41J2/01 501; B41M5/00 100; B41M5/00 114; B41M5/00 120; B41M5/00 132; C09D11/54; D06P1/44 H; D06P5/00 104; D06P5/00 106

According to International Patent Classification (IPC) or to both national classification and IPC

| | |
|---|---|
| **B.** | **FIELDS SEARCHED** |

Minimum documentation searched (classification system followed by classification symbols)

C09D11/54; B41M5/00; D06P1/44; D06P5/00; D06P5/30; B41J2/01

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2021-85128 A (SEIKO EPSON CORP) 03 June 2021 (2021-06-03) <br> claims 1, 2-3, 7-8, 10-11, paragraphs [0013]-[0016], [0046]-[0049], examples 1-14 | 1-4 |
| X | JP 2009-149774 A (SAKATA INKS) 09 July 2009 (2009-07-09) <br> claims 1, 4-5, paragraphs [0054], [0064], [0088], tables 1, 3-4, 35-39 | 1-2, 4 |
| Y | | 2, 3 |
| X | JP 2016-89288 A (SEIKO EPSON CORP) 23 May 2016 (2016-05-23) <br> claims 1, 3, 5, paragraphs [0043], [0046]-[0048], [0068]-[0076], table 2 | 1, 4 |
| Y | | 2, 3 |
| Y | JP 2018-135445 A (RISO KAGAKU CORP) 30 August 2018 (2018-08-30) <br> claim 1, paragraphs [0015]-[0018], [0045]-[0046] | 3 |
| A | WO 2015/079638 A1 (CANON KASEI KK) 04 June 2015 (2015-06-04) <br> paragraph [0055] | 1-4 |

| ☐ Further documents are listed in the continuation of Box C. | ☑ See patent family annex. |
|---|---|

| | |
|---|---|
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2023** | **05 September 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/023337**

| Patent document cited in search report | | | Publication date (day/month/year) | Patent family member(s) | Publication date (day/month/year) |
|---|---|---|---|---|---|
| JP | 2021-85128 | A | 03 June 2021 | (Family: none) | |
| JP | 2009-149774 | A | 09 July 2009 | (Family: none) | |
| JP | 2016-89288 | A | 23 May 2016 | (Family: none) | |
| JP | 2018-135445 | A | 30 August 2018 | US 2018/0237987 A1 claim 1, paragraphs [0017]-[0022] | |
| WO | 2015/079638 | A1 | 04 June 2015 | (Family: none) | |

Form PCT/ISA/210 (patent family annex) (January 2015)

## REFERENCES CITED IN THE DESCRIPTION

**Patent documents cited in the description**

- JP 2019137777 A
- JP 2009149774 A